# FASCICULE DE BREVET EUROPEEN

(11) **EP 3 967 959 B1**
(45) Date de publication et mention de la délivrance du brevet: **01.03.2023**
(21) Numéro de dépôt: 21186198.4
(22) Date de dépôt: 16.07.2021
(51) Int. Cl.: F25J 1/00, F28F 27/00, G01K 1/00

(54) **DISPOSITIF DE MESURE DE TEMPÉRATURES DANS UN ÉCHANGEUR DE CHALEUR**
TEMPERATURMESSVORRICHTUNG IN EINEM WÄRMETAUSCHER
DEVICE FOR MEASURING TEMPERATURES IN A HEAT EXCHANGER

(30) Priorité: 11.09.2020 FR 2009225
(43) Date de publication de la demande: 16.03.2022
(73) Titulaire: L'Air Liquide, Société Anonyme pour l'Etude et l'Exploitation des Procédés Georges Claude, 75007 Paris (FR)
(72) Inventeur: BELMEKKI, Younes, 78350 Jouy en Josas (FR); DELEGUE, Ahlem, 78350 Jouy en Josas (FR); BERHAUT, Paul, 78350 Jouy en Josas (FR); WAGNER, Marc, 78350 Jouy en Josas (FR); HAIK, Natacha, 94500 Champigny sur Marne (FR); AMANT, Ludovic, 94400 Vitry sur Seine (FR)
(74) Mandataire: Air Liquide

(56) Documents cités:
- DE-A1-102009 042 994
- DE-A1-102016 000 246
- DE-A1-102018 003 479
- US-A1- 2017 136 432
- US-A1- 2020 173 882
- US-A1- 2020 215 634

## Description

La présente invention est relative à un échangeur de chaleur du type à plaques brasées comportant au moins une sonde de température permettant de réaliser des mesures de températures d'au moins un fluide circulant dans l'échangeur. DE 10 2009 042994 divulgue un échangeur de chaleur à plaques selon le préambule de la revendication 1.

La présente invention trouve notamment application dans le domaine de la séparation de gaz par cryogénie, en particulier de la séparation d'air par cryogénie (connue sous l'acronyme anglais « ASU » pour unité de séparation d'air) exploitée pour la production d'oxygène gazeux sous pression. En particulier, la présente invention peut s'appliquer à la fabrication d'un échangeur de chaleur qui vaporise un débit liquide, par exemple de l'oxygène liquide, de l'azote et/ou de l'argon par échange de chaleur avec un débit gazeux, par exemple l'air ou l'azote.

La présente invention peut également s'appliquer à un échangeur de chaleur qui vaporise au moins un débit de mélange liquide-gaz, en particulier un débit de mélange à plusieurs constituants, par exemple un mélange d'hydrocarbures, par échange de chaleur avec au moins un autre fluide, par exemple du gaz naturel.

Une technologie couramment utilisée pour les échangeurs de chaleur est celle des échangeurs à plaques brasées, qui permettent d'obtenir des organes très compacts offrant une grande surface d'échange et de faibles pertes de charge. Ces échangeurs sont formés d'un ensemble de plaques parallèles entre lesquelles sont généralement insérées des éléments intercalaires, tels des structures ondulées ou ondes, qui forment des structures d'échange thermique à ailettes. Les plaques empilées forment entre elles un empilement de passages plats pour différents fluides à mettre en relation d'échange thermique.

Lors de la fabrication de l'échangeur, les plaques, les éléments intercalaires à ailettes et les autres éléments constitutifs de l'échangeur sont plaqués les uns contre les autres et sont ensuite liés entre eux par brasage dans un four sous vide à des températures qui peuvent être comprises entre 550 et 900 °C.

Du fait de leur compacité et de leur construction monolithique, il est très difficile d'effectuer des mesures locales de températures au sein de ces échangeurs brasés. Ainsi, dans l'immense majorité des procédés dans lesquels ils sont implantés, l'opérateur n'a accès qu'à la puissance thermique totale échangée entre fluides, grâce à un bilan énergétique réalisé entre l'entrée et la sortie de chaque fluide.

Cela complique fortement la caractérisation de ces échangeurs et ne permet pas, par exemple, de mesurer isolément le coefficient d'échange thermique de chacun des passages.

En utilisation, l'absence de données locales limite les possibilités de contrôle du procédé. En particulier, certains phénomènes physiques particuliers qui peuvent avoir lieu au sein de l'échangeur, tels que des changements de phase ou des réactions chimiques, se traduisent par une variation locale de la température, qui dépend aussi de la position considérée dans l'échangeur.

La mesure locale de températures permettrait de détecter in situ de mauvaises conditions de fonctionnement des échangeurs : mal-distribution des fluides, diminution de la performance de certaines zones de l'échangeur due par exemple à des phénomènes de bouchage ou de distillation locale. Il est aussi utile de bénéficier de mesures locales de températures ou de flux thermiques pour surveiller l'évolution des performances des échangeurs à plaques et ailettes au cours de leur durée de vie.

Face à ces besoins, on constate que les solutions de mesure de températures existantes ne donnent pas entière satisfaction, notamment du fait de la complexité des pièces de maintien utilisées, ou de leur mise en oeuvre.

Des méthodes de mesure de températures « in situ » existent, mais elles sont relativement intrusives, car elles modifient les écoulements des fluides au sein des passages d'échange. Et parce qu'elles ne sont pas prévues dès la construction de l'échangeur, leur mise en oeuvre est relativement complexe, couteuse et peu robuste.

La présente invention a notamment pour but de résoudre tout ou partie des problèmes mentionnés ci-avant, en proposant un échangeur de chaleur à plaques brasées permettant de réaliser au sein de l'échangeur des mesures de températures locales de façon plus précise, à la fois en termes de valeur mesurée et de position dans l'échangeur, et ce sans perturber le fonctionnement de l'échangeur ni l'écoulement des fluides au sein de l'échangeur, et sans augmenter son encombrement.

Dans ce but, l'invention a pour objet un échangeur de chaleur du type à plaques brasées comprenant un empilement de plaques agencées parallèlement entre elles et à une direction longitudinale de façon à définir entre lesdites plaques une pluralité de passages adaptés pour l'écoulement d'au moins un premier fluide suivant la direction longitudinale, lesdits passages étant délimités par des barres de fermetures disposées entre les plaques, au moins une barre de fermeture s'étendant parallèlement à la direction longitudinale et au moins une barre de fermeture s'étendant suivant une direction latérale perpendiculaire à la direction longitudinale, caractérisé en ce qu'au moins un orifice borgne est ménagé dans au moins une des barres de fermeture d'au moins un passage et débouche vers l'extérieur de l'empilement par une ouverture, une sonde de température étant agencée dans l'orifice.

Selon le cas, l'échangeur selon l'invention peut comprendre l'une ou plusieurs des caractéristiques ci-dessous.

Ledit orifice borgne est ménagé dans au moins une barre de fermeture s'étendant parallèlement à la direction longitudinale.

Ledit au moins un passage est délimité entre deux barres de fermeture s'étendant parallèlement à la direction longitudinale et comprenant chacune au moins un orifice borgne.

Ledit au moins un orifice borgne d'une barre de fermeture est agencé en regard d'un orifice borgne de l'autre barre de fermeture.

La barre de fermeture comprend une pluralité d'orifices borgnes positionnés le long de la barre de fermeture à des intervalles prédéterminés.

Les intervalles prédéterminés varient le long d'au moins une partie de la barre de fermeture, de préférence la barre de fermeture est agencée parallèlement à la direction longitudinale et les intervalles augmentent suivant la direction longitudinale le long d'au moins une partie de la barre de fermeture.

Ladite barre de fermeture est agencée parallèlement à la direction longitudinale, ledit passage délimité par la barre de fermeture étant divisé, suivant la direction longitudinale, en au moins deux portions, celle des deux portions située en aval de l'autre ayant des intervalles entre les orifices borgnes supérieurs aux intervalles de l'autre des deux portions.

L'orifice borgne s'étend parallèlement aux plaques, et de préférence orthogonalement à la direction longitudinale.

Ladite au moins une barre de fermeture présente une largeur, mesurée parallèlement à la direction latérale si la barre de fermeture est agencée parallèlement à la direction longitudinale ou mesurée parallèlement à la direction longitudinale si la barre de fermeture est agencée parallèlement à la direction latérale, le rapport entre la profondeur de l'orifice borgne, mesurée entre le fond de l'orifice borgne et l'ouverture, et la largeur de la barre de fermeture étant d'au plus 80%, de préférence compris entre 5 et 80%, de préférence encore compris entre 50 et 80%. L'orifice borgne a une section transversale de forme circulaire, de préférence d'un diamètre allant de 1 mm à 5 mm, de préférence encore de 1,5 mm à 3 mm.

Au moins une partie de l'espace libre ménagé entre la sonde de température et les parois internes de l'orifice borgne est remplie d'un matériau configuré pour assurer une liaison thermo-conductrice entre la sonde de température et les parois internes de l'orifice borgne.

Au moins une partie de la barre ou d'une plaque adjacente est couverte d'un agent de brasage, au moins une partie de l'espace libre ménagé entre la sonde de température et les parois internes de l'orifice borgne étant remplie d'un matériau ayant une température de fusion inférieure ou égale à la température de fusion de l'agent de brasage, de préférence une température de fusion à 500 °C, de préférence inférieure ou égale à 200 °C, de préférence encore inférieure ou égale à 100 °C.

L'invention va maintenant être mieux comprise grâce à la description qui va suivre, donnée à titre d'exemple non limitatif et faite en référence aux figures ci-annexées parmi lesquelles :
Fig. 1 est un vue tridimensionnelle d'un échangeur à plaques brasées selon un mode de réalisation de l'invention,
Fig. 2 est une vue en coupe longitudinale d'un passage d'un échangeur selon un mode de réalisation de l'invention,
Fig. 3 une vue en coupe longitudinale d'un passage d'un échangeur selon un autre mode de réalisation de l'invention.

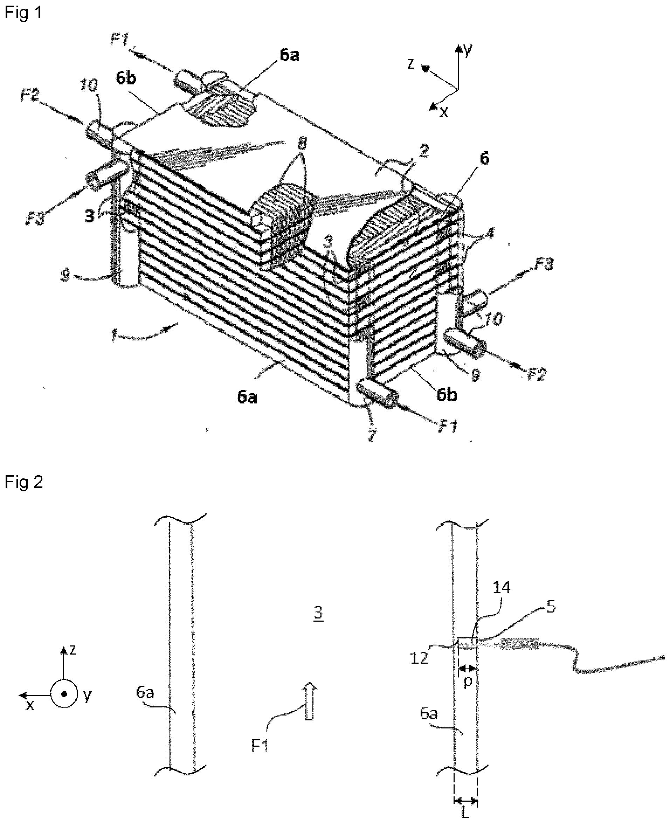

La figure 1 représente un échangeur de chaleur 1 du type à plaques et ailettes brasées comprenant un empilement de plaques 2 qui s'étendent suivant deux dimensions, longueur et largeur, respectivement suivant la direction longitudinale z et la direction latérale x. Les plaques 2 sont disposées l'une au-dessus de l'autre, parallèlement entre elles, et avec espacement. Elles forment ainsi entre elles plusieurs ensembles de passages 3, certains passages étant prévus pour l'écoulement d'un premier fluide F1, et d'autres passages prévus pour l'écoulement d'au moins un autre fluide F2, F3 à mettre en relation d'échange de chaleur indirect avec F1 via les plaques 2. La direction latérale x est perpendiculaire à la direction longitudinale z et parallèle aux plaques 2. Les fluides s'écoulent de préférence dans la longueur de l'échangeur parallèlement à la direction longitudinale z, la longueur étant grande devant la largeur de l'échangeur.

De préférence, chaque passage a une forme parallélépipédique et plate. L'écart entre deux plaques 2 successives, correspondant à la hauteur du passage, mesurée suivant la direction d'empilement y des plaques 2, est petit devant la longueur et la largeur de chaque plaque successive. La direction d'empilement y est orthogonale aux plaques.

Les passages 3 sont délimités par des barres de fermeture 6a, 6b disposées entre les plaques 2, en périphérie des passages 3. Ces barres 6a, 6b assurent l'espacement entre les plaques 2 et définissent les bords périphériques des passages. Au moins une barre de fermeture 6a s'étend suivant la direction longitudinale z, c'est-à-dire que la barre 6a est parallèle à la direction z, de préférence le passage 3 est délimité entre une paire de barres 6a parallèles, et au moins une barre de fermeture 6b s'étend suivant la direction latérale x, c'est-à-dire que la barre 6b est parallèle à la direction x, de préférence le passage 3 est délimité entre une paire de barres 6b parallèles à la direction latérale x.

Selon la localisation des zones d'introduction et d'évacuation de fluide de l'échangeur, les barres de fermeture 6 peuvent n'obturent pas complètement les passages mais laissent des ouvertures libres pour l'entrée ou la sortie des fluides correspondants. L'échangeur 1 comprend des collecteurs de forme semi-tubulaire 7, 9 munis d'entrées et de sorties 10 pour l'introduction des fluides dans l'échangeur 1 et l'évacuation des fluides hors de l'échangeur 1. Ces collecteurs présentent des ouvertures moins larges que les passages. Des zones de distribution agencées en aval des collecteurs d'entrée et en amont des collecteurs de sortie servent à canaliser de façon homogène les fluides vers ou depuis toute la largeur des passages.

De préférence, au moins une partie des passages 3 comprend des éléments intercalaires 8 à ailettes qui s'étendent avantageusement suivant la largeur et la longueur des passages de l'échangeur, parallèlement aux plaques 2. Dans l'exemple illustré, les éléments intercalaires 8 comprennent des ondes d'échange thermique sous forme de tôles ondulées. Dans ce cas, on appelle « ailettes » les jambes d'onde qui relient les sommets et les bases successifs de l'onde. Les éléments intercalaires 8 peuvent aussi revêtir d'autres formes particulières définies selon les caractéristiques d'écoulement de fluide souhaitées. De manière plus générale, le terme « ailettes » couvre des lames ou autres surfaces secondaires d'échange thermique, qui s'étendent depuis les surfaces primaires d'échange thermiques, c'est-à-dire les plaques de l'échangeur, dans les passages de l'échangeur.

De préférence, on utilise des ondes en tant qu'élément intercalaire 8. En particulier, on utilise des ondes dont les ailettes s'étendent parallèlement à la direction longitudinale z, avec une direction générale d'ondulation qui est perpendiculaire à la direction longitudinale z et parallèle aux plaques 2. Un exemple est montré sur la figure 1.

Notons que sur la figure 1, on a représenté des ondes d'échange 8 droites agencées dans les passages de l'échangeurs. Bien entendu, tout type d'ondes est envisageable, notamment des ondes droites non perforées, des ondes à arête de hareng pour « herringbone » en anglais, également appelées ondes ondulées pour « wavy » en anglais, des ondes à décalage partiel... De préférence, lors de la fabrication de l'échangeur 1, on approvisionne un ensemble de plaques 2 que l'on empile parallèlement entre elles et à la direction longitudinale z. Les plaques 2 sont espacées les unes des autres par les barres de fermetures 6a, 6b. Après assemblage des autres éléments constitutifs de l'échangeurs, notamment les ondes d'échanges, les ondes de distribution..., l'empilement est brasé afin de solidariser les éléments de l'échangeurs les unes ou autres. De préférence, les plaques et tout ou partie des autres éléments constitutifs de l'échangeur sont en aluminium ou en alliage d'aluminium.

Un métal d'apport, appelé brasure ou agent de brasage, ayant une température de fusion prédéterminée, est agencé entre les éléments de l'échangeur. De préférence, la température de fusion prédéterminée est comprise entre 550 et 900 °C, de préférence encore comprise entre 550 et 650 °C. L'agent de brasage 30 est de préférence de l'aluminium ou un alliage d'aluminium.

L'assemblage est obtenu par fusion et diffusion de l'agent de brasage au sein des pièces à braser, sans fusion de celles-ci. Les plaques, les éléments intercalaires à ailettes et les autres éléments constitutifs de l'échangeur sont plaqués les uns contre les autres par un dispositif de compression appliquant une force de compression aux plaques 2, comprise typiquement entre 20 000 à 40 000 N/m². L'empilement est introduit dans un four sous vide et brasé à des températures qui peuvent être comprises entre 550 et 900 °C, de préférence comprises entre 550 et 650 °C.

Comme on le voit sur la figure 2, au moins un orifice borgne 12 est ménagé dans au moins une des barres de fermeture 6a, 6b d'au moins un passage 3. L'orifice borgne 12 s'étend parallèlement aux plaques 2 et ne débouche d'un côté vers l'extérieur de l'empilement par une ouverture 5. L'orifice borgne 12 forme une cavité au sein de la barre 6a, 6b configuré pour recevoir au moins une sonde de température 14. Notons que la sonde de température peut être insérée en tout ou partie dans l'orifice borgne 12.

L'invention permet de mesurer la température du fluide s'écoulant dans la passage 3 délimité par la barre de fermeture 6 qui comprend l'orifice, et ce sans perturber l'écoulement du fluide et donc le fonctionnement de l'échangeur. L'encombrement est réduit. Il est également possible de réaliser des mesures de températures localement en choisissant le positionnement de l'orifice. De plus, la sonde de température peut être insérée après l'étape de brasage de l'empilement, ce qui réduit le risque d'endommagement de la sonde et permet d'utiliser une plus grande variété de technologies sans se limiter à des sondes résistantes à hautes températures. En outre, insérer la sonde dans un orifice borgne élimine le risque de fuite car le perçage est non traversant. Dans le cadre de la présente invention, la sonde de température 14 peut être toute sonde configurée pour réaliser des mesures de température par contact. En particulier, la sonde de température 14 peut être une sonde de température par résistance, par exemple une sonde à résistance, notamment à résistance de platine du type PT100, ou bien une sonde de température à thermocouple ou à thermistance.

Notons que la sonde 14 introduite dans l'orifice 12 s'entend d'au moins la partie thermosensible d'un système de capteur, notamment le circuit résistif dans le cas d'une mesure par résistance ou la jonction de mesure entre les deux fils conducteurs d'un thermocouple, jonction également dénommée soudure chaude. Les autres éléments du capteur nécessaires à la prise de mesure, notamment un dispositif d' alimentation électrique, un dispositif de mesure de tension électrique sont agencés à l'extérieur de l'empilement et reliés à la sonde 14 par des fils conducteurs appropriés, tels des fils de cuivre, de thermocouple ou des câbles de prolongation). Dans le cas d'une sonde de température 14 à thermocouple, la sonde 14 peut comprendre deux fils conducteurs électriques soudés à une extrémité pour former la jonction de mesure, les fils étant agencés dans l'orifice 12 nus ou dans une gaine protectrice, de forme généralement cylindrique. La figure 2 représente au moins un orifice borgne 12 ménagé dans une barre de fermeture 6a s'étendant sur un bord d'un passage 3, parallèlement à la direction longitudinale z, c'est-dire parallèlement à la direction globale d'écoulement du premier fluide F 1. Cette configuration permet de mesurer localement la température du fluide, et donc son évolution, à différentes positions dans la longueur de l'échangeur, au fur et à mesure qu'il échange de la chaleur avec un autre fluide circulant dans un passage adjacent. Cela des informations sur les phénomènes physiques qui peuvent avoir lieu au sein de l'échangeur, notamment les changements de phase, les réactions chimiques, et sur leur localisation dans l'échangeur.

Il est aussi envisageable qu'un ou plusieurs orifices borgnes 12 soient ménagés dans d'autres barres de fermetures, notamment des barres de fermetures 6b parallèles à la direction latérale x. Selon un mode de réalisation, au moins un passage 3 est délimité entre deux barres de fermeture 6a s'étendant parallèlement à la direction longitudinale z et comprenant chacune au moins un orifice borgne 12. Agencer des sondes sur les barres situées de part et d'autre du passage 3 permet de vérifier si le fluide est bien distribué de façon homogène sur la largeur du passage. La réalisation de mesures de températures de chaque côté du passage permet de détecter d'éventuels phénomènes de maldistribution. L'échange thermique dans le passage, dont dépendent les températures de fluide et des barres, est lié au débit du fluide à proximité des sondes. Les différences de températures entre chaque côté révèlent donc des différences de débit. Par ailleurs, les sondes permettent de suivre en dynamique les régimes transitoires de température dans le temps et d'apprécier les chocs thermiques subis par l'échangeur.

En particulier, au moins un orifice borgne 12 d'une barre de fermeture 6a est agencé en regard d'un orifice borgne 12 de l'autre barre de fermeture 6a situé sur le bord opposé du passage 3. Dit autrement, les orifices borgnes occupent les mêmes positions zi le long des barres de fermeture.

En fait, tout ou partie des barres de fermetures 6a, 6b d'un ou plusieurs passages 3 de l'échangeur peut comprendre une pluralité d'orifices borgnes 12 positionnés le long de la barre de fermeture 6a, 6b à des intervalles prédéterminés. Un intervalle est défini comme la distance séparant deux orifices 12 successifs d'une même barre. L'arrangement de plusieurs orifices permet de mesurer des températures à différentes positions dans la longueur et/ou la largeur de l'échangeur, notamment pour déterminer où ont lieu différentes réactions ou changement de phase. On obtient ainsi une cartographie des phénomènes physico-chimiques qui peuvent se produire dans l'échangeur. L'agencement d'orifices avec sondes sur différents passages permet également un comparatif entre les distributions de température sur des passages situés à des hauteurs différentes dans l'empilement de l'échangeur.

Les intervalles prédéterminés peuvent varier le long d'au moins une partie de la barre de fermeture 6a, 6b, afin de pouvoir mesurer des températures de fluide localement aux endroits souhaités. De préférence, lorsque la barre de fermeture 6a est agencée parallèlement à la direction longitudinale z, les intervalles entre les orifices 12 augmentent suivant la direction longitudinale z le long de tout ou partie de la barre de fermeture 6. Notons que l'augmentation peut être une augmentation progressive, d'un orifice à un autre, ou une augmentation par palier, c'est-à-dire que l'intervalle entre plusieurs orifices successifs peuvent être positionnés à intervalle constant sur au moins une portion de barre, puis augmenter sur la portion suivante. En effet, il peut être utile de cartographier plus finement les températures du fluide en partie basse du passage, au niveau ou à proximité de son point d'introduction, car il peut se produire des phénomènes d'inhomogénéité dans la distribution du fluide, notamment des inhomogénéités en termes de débit ou de répartition entre deux phases dans le cas d'un fluide à l'état diphasique liquide/gaz par exemple. Ces phénomènes de mal distribution se traduisent en effet par des variations locales de température. En outre, dans le cas d'un fluide diphasique, la phase liquide du fluide a une capacité frigorifique supérieure à celle de la phase gazeuse. Une variation du ratio liquide/gaz du fluide se traduit donc par une variation significative de la température des barres, des plaques et des ondes de l'échangeur.

Selon un mode de réalisation, la barre de fermeture 6 est agencée parallèlement à la direction longitudinale z, ledit passage 3 délimité par la barre de fermeture 6a étant divisé, suivant la direction longitudinale z, en au moins deux portions 31, 32, celle 32 des deux portions qui est située en aval de l'autre ayant des intervalles entre les orifices borgnes 12 supérieurs aux intervalles de l'autre 31 des deux portions. Notons que le terme « aval » s'entend en référence au sens d'écoulement du fluide dans le passage considéré.

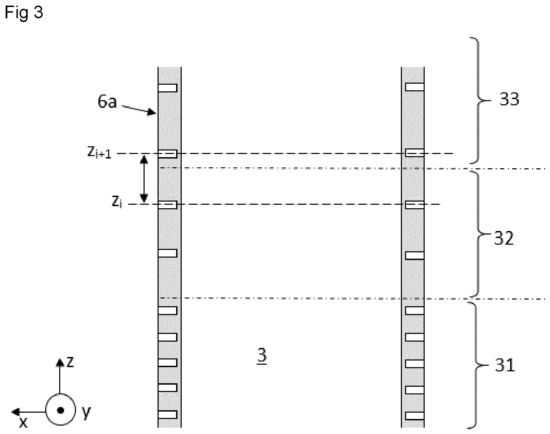

Ainsi, la figure 3 illustre un exemple dans lequel les intervalles entre les orifices d'une barre augmentent en suivant la direction longitudinale z. L'augmentation à lieu entre des portions successives 31, 32, 33. Les intervalles sont constants sur chaque portion.

De préférence, l'orifice borgne 12 s'étend parallèlement aux plaques 2, et de préférence orthogonalement à la direction longitudinale z si l'orifice est ménagé dans une barre parallèle à la direction longitudinale z et orthogonalement à la direction latérale x si l'orifice est ménagé dans une barre parallèle à la direction latérale x.

En particulier, l'orifice borgne 12 peut avoir une section transversale de forme circulaire, de préférence d'un diamètre allant de 1 mm à 5 mm, de préférence encore de 1,5 mm à 3 mm. On pourra envisager d'autres formes de sections transversales, notamment carrée, rectangulaire,...en fonction de la forme de la sonde 14 à loger.

On pourra adapter la ou les dimensions transverses des orifices 12 en fonction de celles de la barre. En particulier, si la barre présente une hauteur h, mesurée suivant une direction d'empilement y, l'orifice borgne peut avoir un diamètre d avec le rapport d/h compris entre 10 et 90%.

On pourra aussi adapter la profondeur des orifices 12 pour s'adapter aux dimensions de la barre 6. Comme visible sur l'exemple de la figure 2, ladite au moins une barre de fermeture présente une largeur L, mesurée parallèlement à la direction latérale x si la barre de fermeture 6a est agencée parallèlement à la direction longitudinale z ou mesurée parallèlement à la direction longitudinale z si la barre de fermeture 6b est agencée parallèlement à la direction latérale. A titre d'exemple, la largeur L peut aller de 15 à 25 mm. En outre, l'orifice borgne 12 présente une profondeur p mesurée entre le fond de l'orifice 12 et l'ouverture 5. Le rapport entre la profondeur p de l'orifice borgne 12 et la largeur L de la barre est de préférence d'au plus 80%, de préférence compris entre 5 et 80%, de préférence encore entre 50 et 80%. Ceci permet d'assurer un bon contact de l'élément sensible de la sonde et du matériau de la barre. Cette plage de rapports permet de minimiser la résistance thermique entre la sonde et la barre, tout en conservant assez de matière entre l'extrémité de la sonde et le bord de la barre pour garantir la résistance mécanique de l'ensemble. De préférence la différence entre la largeur L et la profondeur p est d'au moins 3 mm.

De préférence, au moins une partie de l'espace libre ménagé entre la sonde de température 14 et les parois internes de l'orifice borgne 12 est remplie d'un matériau configuré pour assurer une liaison thermo-conductrice entre la sonde de température 14 et les parois internes de l'orifice borgne 12. Ceci minimise la résistance thermique entre la sonde et la barre, ce qui améliore grandement la précision de la mesure.

Afin de solidariser ces éléments, au moins une partie de la barre 6a, 6b et/ou d'une plaque 2 adjacente est couverte d'un agent de brasage. Selon un mode de réalisation, le matériau remplissant l'espace libre entre la sonde de température 14 et les parois internes de l'orifice 12 présente une température de fusion inférieure ou égale à la température de fusion de l'agent de brasage, de préférence une température de fusion à 500 °C, de préférence inférieure ou égale à 200 °C, de préférence encore inférieure ou égale à 100 °C.

En particulier, le matériau peut être choisi parmi des métaux ou alliages métalliques contenant au moins l'un des métaux suivants : indium, bismuth, étain, plomb, cadmium, gallium. De manière plus générale, le matériau peut être tout matériau conducteur thermique. L'emploi d'une colle thermo-conductrice est ainsi envisageable.

Une possibilité pour disposer ce matériau dans l'orifice 12 est d'y introduire au moins un élément formé du matériau, tel un fil, après ou simultanément à l'introduction de la sonde de température 14 dans l'orifice 12, puis de chauffer et faire fondre l'élément autour de la sonde. Cela améliore encore le contact thermique entre l'échangeur et la sonde, même avec une sonde de forme irrégulière ou lorsque la sonde est formée de fils nus joints entre eux. Il est aussi envisageable de couler le deuxième matériau à l'état liquide autour de la sonde 14 dans l'orifice 12.

Bien entendu, l'invention n'est pas limitée aux exemples particuliers décrits et illustrés dans la présente demande. D'autres variantes ou modes de réalisation à la portée de l'homme du métier peuvent aussi être envisagés sans sortir du cadre de l'invention définie par les revendications ci-après. On notera notamment que des barres de fermetures de passages différents ou d'un même passage peuvent présenter au moins un orifice borgne selon l'invention, ces barres pouvant présenter des configurations différentes, en particulier un nombre d'orifices, des formes et/ou une répartition le long de la barre différents.

## Revendications

1. Echangeur de chaleur du type à plaques brasées comprenant un empilement de plaques (2) agencées parallèlement entre elles et à une direction longitudinale (z) de façon à définir entre lesdites plaques (2) une pluralité de passages (3) adaptés pour l'écoulement d'au moins un premier fluide suivant la direction longitudinale (z), lesdits passages (3) étant délimités par des barres de fermetures (6a, 6b) disposées entre les plaques (2), au moins une barre de fermeture (6a) s'étendant parallèlement à la direction longitudinale (z) et au moins une barre de fermeture (6b) s'étendant suivant une direction latérale (x) perpendiculaire à la direction longitudinale (z), **caractérisé en ce qu'**au moins un orifice borgne (12) est ménagé dans au moins une des barres de fermeture (6a, 6b) d'au moins un passage (3) et débouche vers l'extérieur de l'empilement par une ouverture (5), une sonde de température (14) étant agencée dans l'orifice (12).

2. Echangeur selon la revendication 1, **caractérisé en ce que** ledit orifice borgne (12) est ménagé dans au moins une barre de fermeture (6a) s'étendant parallèlement à la direction longitudinale (z).

3. Echangeur selon l'une des revendications 1 ou 2, **caractérisé en ce que** ledit au moins un passage (3) est délimité entre deux barres de fermeture (6a) s'étendant parallèlement à la direction longitudinale (z) et comprenant chacune au moins un orifice borgne (12).

4. Echangeur selon la revendication 3, **caractérisé en ce que** ledit au moins un orifice borgne (12) d'une barre de fermeture (6a) est agencé en regard d'un orifice borgne (12) de l'autre barre de fermeture (6a).

5. Echangeur selon l'une des revendications précédentes, **caractérisé en ce que** la barre de fermeture (6a, 6b) comprend une pluralité d'orifices borgnes (12) positionnés le long de la barre de fermeture (6a, 6b) à des intervalles prédéterminés.

6. Echangeur selon la revendication 5, **caractérisé en ce que** les intervalles prédéterminés varient le long d'au moins une partie de la barre de fermeture (6a 6b), de préférence la barre de fermeture (6a) est agencée parallèlement à la direction longitudinale (z) et les intervalles augmentent suivant la direction longitudinale (z) le long d'au moins une partie de la barre de fermeture (6).

7. Echangeur selon l'une des revendications 5 ou 6, **caractérisé en ce que** ladite barre de fermeture (6) est agencée parallèlement à la direction longitudinale (z), ledit passage (3) délimité par la barre de fermeture (6) étant divisé, suivant la direction longitudinale (z), en au moins deux portions (31, 32), celle (32) des deux portions située en aval de l'autre ayant des intervalles entre les orifices borgnes (12) supérieurs aux intervalles de l'autre (31) des deux portions.

8. Echangeur selon l'une des revendications précédentes, **caractérisé en ce que** l'orifice borgne (12) s'étend parallèlement aux plaques (2), et de préférence orthogonalement à la direction longitudinale (z).

9. Echangeur selon l'une des revendications précédentes, **caractérisé en ce que** ladite au moins une barre de fermeture (6) présente une largeur (L), mesurée parallèlement à la direction latérale (x) si la barre de fermeture (6) est agencée parallèlement à la direction longitudinale (z) ou mesurée parallèlement à la direction longitudinale (z) si la barre de fermeture (6) est agencée parallèlement à la direction latérale (x), le rapport entre la profondeur (p) de l'orifice borgne (12), mesurée entre le fond de l'orifice borgne (12) et l'ouverture (5), et la largeur (L) de la barre de fermeture étant d'au plus 80%, de préférence compris entre 5 et 80%, de préférence encore compris entre 50 et 80%.

10. Echangeur selon l'une des revendications précédentes, **caractérisé en ce que** l'orifice borgne (12) a une section transversale de forme circulaire, de préférence d'un diamètre allant de 1 mm à 5 mm, de préférence encore de 1,5 mm à 3 mm.

11. Echangeur selon l'une des revendications précédentes, **caractérisé en ce que** au moins une partie de l'espace libre ménagé entre la sonde de température (14) et les parois internes de l'orifice borgne (12) est remplie d'un matériau configuré pour assurer une liaison thermo-conductrice entre la sonde de température (14) et les parois internes de l'orifice borgne (12).

12. Echangeur selon l'une des revendications précédentes, **caractérisé en ce qu'**au moins une partie de la barre (6a, 6b) ou d'une plaque (2) adjacente est couverte d'un agent de brasage, au moins une partie de l'espace libre ménagé entre la sonde de température (14) et les parois internes de l'orifice borgne (12) étant remplie d'un matériau ayant une température de fusion inférieure ou égale à la température de fusion de l'agent de brasage, de préférence une température de fusion à 500 °C, de préférence inférieure ou égale à 200 °C, de préférence encore inférieure ou égale à 100 °C.

## Patentansprüche

1. Wärmetauscher vom Typ mit gelöteten Platten umfassend einen Stapel aus Platten (2), die parallel zueinander und in einer Längsrichtung (z) angeordnet sind, so dass zwischen den Platten (2) eine Mehrzahl von Durchlässen (3) definiert wird, die für die Strömung wenigstens eines ersten Fluids in der Längsrichtung (z) geeignet sind, wobei die Durchlässe (3) von Schließstangen (6a, 6b) begrenzt sind, die zwischen den Platten (2) angeordnet sind, wobei sich wenigstens eine Schließstange (6a) parallel zur Längsrichtung (z) erstreckt und sich wenigstens eine Schließstange (6b) in einer seitlichen Richtung (x) senkrecht zur Längsrichtung (z) erstreckt, **dadurch gekennzeichnet, dass** wenigstens ein Sackloch (12) in wenigstens einer der Schließstangen (6a, 6b) wenigstens eines Durchlasses (3) vorgesehen ist und außerhalb des Stapels durch eine Öffnung (5) mündet, wobei ein Temperaturfühler (14) im Loch (12) angeordnet ist.

2. Wärmetauscher nach Anspruch 1, **dadurch gekennzeichnet, dass** das Sackloch (12) in wenigstens einer Schließstange (6a) vorgesehen ist, die sich parallel zur Längsrichtung (z) erstreckt.

3. Wärmetauscher nach einem der Ansprüche 1 oder 2, **dadurch gekennzeichnet, dass** der wenigstens eine Durchlass (3) zwischen zwei Schließstangen (6a) begrenzt ist, die sich parallel zur Längsrichtung (z) erstrecken und jeweils mindestens ein Sackloch (12) umfassen.

4. Wärmetauscher nach Anspruch 3, **dadurch gekennzeichnet, dass** das wenigstens eine Sackloch (12) einer Schließstange (6a) gegenüber einem Sackloch (12) der anderen Schließstange (6a) angeordnet ist.

5. Wärmetauscher nach einem der vorhergehenden Ansprüche, **dadurch gekennzeichnet, dass** die Schließstange (6a, 6b) eine Mehrzahl von Sacklöchern (12) umfasst, die in vorbestimmten Abständen die Schließstange (6a, 6b) entlang positioniert sind.

6. Wärmetauscher nach Anspruch 5, **dadurch gekennzeichnet, dass** die vorbestimmten Abstände entlang wenigstens eines Abschnitts der Schließstange (6a, 6b) variieren, die Schließstange (6a) vorzugsweise parallel zur Längsrichtung (z) angeordnet ist und die Abstände in der Längsrichtung (z) entlang wenigstens eines Abschnitts der Schließstange (6) zunehmen.

7. Wärmetauscher nach einem der Ansprüche 5 oder 6, **dadurch gekennzeichnet, dass** die Schließstange (6) parallel zur Längsrichtung (z) angeordnet ist, wobei der Durchlass (3), der von der Schließstange (6) begrenzt ist, in der Längsrichtung (z) in wenigstens zwei Teilbereiche (31, 32) aufgeteilt ist, wobei jener (32) der zwei Teilbereiche, der sich stromab des anderen befindet, Abstände zwischen den Sacklöchern (12) aufweist, die größer als die Abstände des anderen (31) der zwei Teilbereiche sind.

8. Wärmetauscher nach einem der vorhergehenden Ansprüche, **dadurch gekennzeichnet, dass** sich das Sackloch (12) parallel zu den Platten (2) und vorzugsweise orthogonal zur Längsrichtung (z) erstreckt.

9. Wärmetauscher nach einem der vorhergehenden Ansprüche, **dadurch gekennzeichnet, dass** die wenigstens eine Schließstange (6) eine Breite (L) aufweist, die parallel zur seitlichen Richtung (x) gemessen wird, wenn die Schließstange (6) parallel zur Längsrichtung (z) angeordnet ist, oder parallel zur Längsrichtung (z) gemessen wird, wenn die Schließstange (6) parallel zur seitlichen Richtung (x) angeordnet ist, wobei das Verhältnis zwischen der Tiefe (p) des Sacklochs (12), die zwischen dem Boden des Sacklochs (12) und der Öffnung (5) gemessen wird, und der Breite (L) der Schließstange höchstens 80 %, vorzugsweise zwischen 5 und 80 %, besser noch zwischen 50 und 80 % beträgt.

10. Wärmetauscher nach einem der vorhergehenden Ansprüche, **dadurch gekennzeichnet, dass** das Sackloch (12) einen kreisförmigen Querschnitt aufweist, vorzugsweise mit einem Durchmesser von 1 mm bis 5 mm, besser noch von 1,5 mm bis 3 mm.

11. Wärmetauscher nach einem der vorhergehenden Ansprüche, **dadurch gekennzeichnet, dass** wenigstens ein Abschnitt des freien Raums, der zwischen dem Temperaturfühler (14) und den Innenwänden des Sacklochs (12) vorgesehen ist, mit einem Material gefüllt ist, das dazu ausgebildet ist, eine wärmeleitende Verbindung zwischen dem Temperaturfühler (14) und den Innenwänden des Sacklochs (12) sicherzustellen.

12. Wärmetauscher nach einem der vorhergehenden Ansprüche, **dadurch gekennzeichnet, dass** wenigstens ein Abschnitt der Stange (6a, 6b) oder einer angrenzenden Platte (2) mit einem Lötmittel bedeckt ist, wobei wenigstens ein Abschnitt des freien Raums, der zwischen dem Temperaturfühler (14) und den Innenwänden des Sacklochs (12) vorgesehen ist, mit einem Material gefüllt ist, das eine Schmelztemperatur kleiner als oder gleich der Schmelztemperatur des Lötmittels, vorzugsweise eine Schmelztemperatur bei 500 °C, vorzugsweise kleiner als oder gleich 200 °C, besser noch kleiner als oder gleich 100 °C aufweist.

## Claims

1. Heat exchanger of the brazed plate type comprising a stack of plates (2) arranged parallel to one another and to a longitudinal direction (z) so as to define between said plates (2) a plurality of passages (3) designed for the flow of at least a first fluid in the longitudinal direction (z), said passages (3) being delimited by sealing bars (6a, 6b) positioned between the plates (2), at least one sealing bar (6a) extending parallel to the longitudinal direction (z) and at least one sealing bar (6b) extending in a lateral direction (x) perpendicular to the longitudinal direction (z), **characterized in that** at least one blind orifice (12) is formed in at least one of the sealing bars (6a, 6b) sealing at least one passage (3) and opens to the outside of the stack via an opening (5), a temperature probe (14) being arranged in the orifice (12) .

2. Exchanger according to Claim 1, **characterized in that** said blind orifice (12) is formed in at least one sealing bar (6a) extending parallel to the longitudinal direction (z).

3. Exchanger according to either of Claims 1 and 2, **characterized in that** said at least one passage (3) is delimited between two sealing bars (6a) extending parallel to the longitudinal direction (z) and each comprising at least one blind orifice (12).

4. Exchanger according to Claim 3, **characterized in that** said at least one blind orifice (12) of one sealing bar (6a) is positioned facing a blind orifice (12) of the other sealing bar (6a).

5. Exchanger according to one of the preceding claims, **characterized in that** the sealing bar (6a, 6b) comprises a plurality of blind orifices (12) positioned along the sealing bar (6a, 6b) at predetermined intervals.

6. Exchanger according to Claim 5, **characterized in that** the predetermined intervals vary along at least part of the sealing bar (6a, 6b) and preferably the sealing bar (6a) is arranged parallel to the longitudinal direction (z) and the intervals increase in the longitudinal direction (z) along at least part of the sealing bar (6).

7. Exchanger according to either of Claims 5 and 6, **characterized in that** said sealing bar (6) is arranged parallel to the longitudinal direction (z), said passage (3) delimited by the sealing bar (6) being divided, in the longitudinal direction (z), into at least two portions (31, 32), that one (32) of the two portions that is situated downstream of the other having intervals between the blind orifices (12) that are greater than the intervals of the other (31) of the two portions.

8. Exchanger according to one of the preceding claims, **characterized in that** the blind orifice (12) extends parallel to the plates (2) and preferably orthogonally to the longitudinal direction (z).

9. Exchanger according to one of the preceding claims, **characterized in that** said at least one sealing bar (6) has a width (L), measured parallel to the lateral direction (x) if the sealing bar (6) is arranged parallel to the longitudinal direction (z) or measured parallel to the longitudinal direction (z) if the sealing bar (6) is arranged parallel to the lateral direction (x), the ratio between the depth (p) of the blind orifice (12), measured between the closed end of the blind orifice (12) and the opening (5), and the width (L) of the sealing bar being at most 80%, preferably comprised between 5 and 80%, and more preferably still, comprised between 50 and 80%.

10. Exchanger according to one of the preceding claims, **characterized in that** the blind orifice (12) has a cross section of circular shape, preferably with a diameter ranging from 1 mm to 5 mm, more preferably still from 1.5 mm to 3 mm.

11. Exchanger according to one of the preceding claims, **characterized in that** at least part of the free space formed between the temperature probe (14) and the internal walls of the blind orifice (12) is filled with a material configured to ensure a heatconducting connection between the temperature probe (14) and the internal walls of the blind orifice (12) .

12. Exchanger according to one of the preceding claims, **characterized in that** at least part of the bar (6a, 6b) or of an adjacent plate (2) is covered with a brazing agent, at least part of the free space formed between the temperature probe (14) and the internal walls of the blind orifice (12) being filled with a material having a melting point lower than or equal to the melting point of the brazing agent, preferably a melting point of 500°C, preferably less than or equal to 200°C, and more preferably still, less than or equal to 100°C.
